# EUROPEAN PATENT SPECIFICATION

(11) **EP 4 651 725 B1**
(45) Date of publication and mention of the grant of the patent: **16.09.2026**
(21) Application number: 24701528.2
(22) Date of filing: 18.01.2024
(51) Int. Cl.: A22C 21/00

(54) **SYSTEM FOR MAKING PREPARATORY INCISION LONGITUDINALLY OF A POULTRY LEG**
SYSTEM ZUR HERSTELLUNG EINES VORBEREITENDEN EINSCHNITTS IN LÄNGSRICHTUNG EINES GEFLÜGELBEINS
SYSTÈME POUR RÉALISER UNE INCISION PRÉPARATOIRE DANS LE SENS DE LA LONGUEUR D'UNE CUISSE DE VOLAILLE

(30) Priority: 19.01.2023 NL 2033991
(43) Date of publication of application: 26.11.2025
(73) Proprietor: Foodmate B.V., 3281 NJ Numansdorp (NL)
(72) Inventor: DE KORT, Jelle, 3281 NJ Numansdorp (NL); DE KONING, Adriaan Hendrik, 3281 NJ Numansdorp (NL)
(74) Representative: V.O.
(86) International application number: PCT/NL2024/050026
(87) International publication number: WO 2024/155189

(56) References cited:
- EP-A1- 2 667 728
- EP-A2- 1 164 857
- EP-B1- 3 250 039

## Description

### FIELD

The invention relates to a system for automatically making a preparatory incision longitudinally of a poultry leg.

### BACKGROUND

Processing poultry legs, having an upper and a lower leg portions articulated by a joint, has become a substantially automated process that largely eliminates manual labour. Deboning of poultry legs may involve the automated making of a preparatory incision longitudinally of the poultry leg, to facilitate the extraction of meat from the bones of the poultry leg. EP3250039B1 discloses an example of a device for making such a preparatory incision longitudinally of the entire poultry leg. Poultry legs are conveyed depending from the ankle joint by an overhead conveyor, wherein a knife of the device is longitudinally driven along a fixed predetermined cutting trajectory for making a curved preparatory incision along the entire poultry leg, often referred to as a J-cut. The preparatory incision is initiated at an ankle joint of the poultry leg, and extends along a lower leg portion, via a knee joint along an upper leg portion to a hip joint.

Alternative poultry leg processing lines are arranged for obtaining boned leg portions of a poultry leg, particularly for obtaining boned lower leg potions which are often referred to as 'drumsticks'. These alternative processing lines do not preparatorily incise the poultry leg for deboning but are rather arranged to separate the boned lower leg portion from the boned upper leg portion of the leg.

EP 3 250 039 B1 discloses a device for automatically making a preparatory incision longitudinally of an animal extremity part with a first and a second bone articulated by a joint.

### SUMMARY

The invention is set out in the appended claims.

It is an aim to propose a system for processing a poultry leg having a first bone and a second bone articulated by a joint and surrounded by meat. More particular, it is an object to provide an improved system for making a preparatory incision longitudinally of a poultry leg having a first bone and a second bone articulated by a joint and surrounded by meat. In a more general sense it is an object to overcome or reduce at least one of the disadvantages of the prior art.

Hereto, an aspects provide a system for making a preparatory incision longitudinally of a poultry leg having a first bone and a second bone articulated by a joint and surrounded by meat. The first bone may for example be associated with a first leg section, e.g. the lower leg section or 'drumstick" of the poultry leg. The second bone may for example be associated with a second leg section, e.g. the upper leg section or 'thigh' of the poultry leg. It will be appreciated that the first leg section may alternatively be associated with the upper leg section or 'thigh' of the poultry leg, and the second leg section with the lower leg section or 'drumstick" of the poultry leg. The system comprises a cutting unit having a knife, and a conveyor for conveying the poultry leg along a path of conveyance coincident with the cutting unit. The system further comprises a drive mechanism for driving the cutting unit.

In one aspect, the drive mechanism is arranged for selectively being in a first mode or a second mode. The drive mechanism in the first mode is configured for driving the cutting unit so as to move the knife along a predefined first cutting trajectory for making a first preparatory incision longitudinally of the poultry leg. The drive mechanism in the second mode is configured for driving the cutting unit so as to move the knife along a predefined second cutting trajectory, different from the first cutting trajectory, for making a second preparatory incision longitudinally of the poultry leg. The secondary drive mechanism is hence adjustable between at least the first mode and the second mode, for providing different preparatory incisions. The system can select between at least two different preparatory incisions, e.g. the first and the second preparatory incision, hence providing flexibility as to processing of the poultry leg. For example, the first predefined cutting trajectory may incises along the entire poultry leg for allowing deboning of the entire poultry leg. The second cutting trajectory may only incise the poultry leg along the second bone, e.g. a one of the thigh or the drumstick, for allowing deboning of the thigh, while refraining from incising along the first bone, e.g. another one of the drumstick or the thigh, so as to obtaining substantially intact boned drumsticks or thighs. In another example, the first cutting trajectory and the second cutting trajectory may both only incise the poultry leg along the same one of the first bone or the second bone, wherein the first cutting trajectory differs from the second cutting trajectory, such as in incision length and/or incision location. The preparatory incising can hence be adapted to dimensions of the poultry leg.

The first cutting trajectory and the second cutting trajectory may for example be aligned with each other. Also, the first cutting trajectory and the second cutting trajectory may be at least partly overlapping each other.

In another aspect, the drive mechanism comprises a primary drive mechanism and a secondary drive mechanism, wherein the drive mechanism is arranged for selectively being in a cutting mode or a non-cutting mode. The drive mechanism in the cutting mode is arranged to drive, by the primary drive mechanism, the cutting unit to move the knife from the non-cutting position to the cutting position and to drive the cutting unit, by the secondary drive mechanism, longitudinally of the poultry leg to move the knife along the cutting trajectory for making the preparatory incision. The drive mechanism in the non-cutting mode is configured for refraining from driving, by the primary drive mechanism, the cutting unit to move the knife from the non-cutting position to the cutting position, and to drive, by the secondary drive mechanism, the cutting unit longitudinally of the poultry leg while maintaining the knife in the non-cutting position. Hence, the system can be selectively operated according to the cutting mode for incising the poultry leg, or the non-cutting mode for not incising the poultry leg. It will be appreciated that, in the cutting mode, the system may be selectively operated according to the first mode or the second mode as described herein, for making different preparatory incisions longitudinally of the poultry leg. The system may hence be selectively operated according to the cutting or non-cutting mode, as well as according to the first or second mode.

Optionally, the drive mechanism in the first mode is arranged for moving the knife between a cutting position for performing the first preparatory incision to non-cutting position, and wherein the drive mechanism in the second mode is arranged for, with respect to the first mode, retarding and/or advancing the movement of the knife between the cutting position to the non-cutting position. The system may hence be configured for controlling, by means of the drive mechanism, a location of insertion of the knife into the poultry leg and/or a location of withdrawal of the knife from the poultry leg. A length and a position of the first and second preparatory incisions may hence be controlled. The non-cutting position of the knife may optionally correspond to a receiving position of the knife for allowing receiving of the poultry leg.

Hence, the secondary drive mechanism may be adjustable relative to the conveyor between the first mode and the second mode for in the first mode causing the knife to move between the cutting position and the non-cutting position at a first location along the conveyance path, and in the second mode causing the knife to move between the cutting position and the non-cutting position at a second location along the conveyance path different, e.g. downstream or upstream, from the first location. At the first location and at the second location, the knife may be moved from the cutting position to the non-cutting position, or vice versa.

Optionally, the drive mechanism in the first mode is arranged for moving the knife from a cutting position for performing the first preparatory incision to non-cutting position, and wherein the drive mechanism in the second mode is arranged for, with respect to the first mode, retarding the movement of the knife from the cutting position to the non-cutting position for performing the second preparatory incision. A location of withdrawal of the knife from the poultry leg may hence differ between the first and second mode.

Optionally, the drive mechanism in the first mode is arranged for moving the knife from a receiving position for receiving the poultry leg to a cutting position for performing the first preparatory incision, and wherein the drive mechanism in the second mode is arranged for, with respect to the first mode, retarding the movement of the knife from the receiving position to the cutting position for performing the second preparatory incision. A location of insertion of the knife into the poultry leg may hence differ between the first and second mode.

Optionally, the first preparatory incision is a preparatory incision of a first length, and wherein the second preparatory incision is of the second length different from the first length.

Optionally, the first preparatory incision is a preparatory incision longitudinally of the first bone and the second bone, and wherein the second preparatory incision is a preparatory incision longitudinally of the second bone and not of the first bone.

Optionally, the drive mechanism comprises a primary drive mechanism for moving the cutting unit lengthwise of a linear guide member from a first cutting unit position to a second cutting unit position, and a secondary drive mechanism arranged for moving the knife from the receiving position for receiving the poultry leg to the cutting position for performing the preparatory incision.

Optionally, the primary drive mechanism is substantially invariable in use.

Optionally, the secondary drive mechanism is adjustable in use.

Optionally, the secondary drive mechanism is arranged for, in the first mode, moving the knife from the receiving position to the cutting position when the cutting unit is at the first cutting unit position, and wherein the secondary drive mechanism is arranged for, in the second mode, moving the knife from the receiving position to the cutting position when the cutting unit is at an intermediate cutting unit position between the first cutting unit position and the second cutting unit position.

Optionally, the secondary drive mechanism is arranged for, in the first mode, moving the knife from the cutting position to the non-cutting position when the cutting unit is at the second cutting unit position, and wherein the secondary drive mechanism is arranged for, in the second mode, moving the knife from the cutting position to the non-cutting position when the cutting unit is at an intermediate cutting unit position between the first cutting unit position and the second cutting unit position.

Optionally, the first cutting unit position and the intermediate cutting unit position are predetermined and fixed.

Optionally, the secondary drive mechanism comprises an adjustable secondary guide track configured for, in the first mode, guiding a secondary follower wheel of the cutting unit along a first path or, in the second mode, guiding the secondary follower wheel along a second, different, path.

Optionally, the secondary drive mechanism comprises an actuation unit associated with the linear guide member, the actuation unit comprising the secondary follower wheel for being guided by the secondary guide track to be moved lengthwise of the linear guide member relative to the cutting unit between a proximal position, proximate the cutting unit, and a distal position, distal from the cutting unit, and wherein the actuation unit in the proximal position is arranged for causing the cutting unit to be in the non-cutting position and wherein the actuation unit in the distal position is arranged for causing the cutting unit to be in the cutting position, or vice versa.

Optionally, the actuation unit is releasably latchable to the cutting unit in the proximal position of the actuation unit. The actuation unit and cutting unit can hence be coupled to each other, such that the actuation unit moves along with the cutting unit lengthwise of the elongate guide member, e.g. as induced by the primary drive mechanism. When the actuation unit is latched to the cutting unit, the cutting unit may be maintained in the non-cutting position. In an alternative configuration, the cutting unit may be maintained in the cutting position when the actuation unit is latched to the cutting unit. The actuation unit may be biased relative to the cutting unit towards the distal position. Hence, movement of the actuation unit and the cutting unit towards each other may be against a biasing force. The actuation unit can hence be moved to the distal position by the biasing force, upon disconnection from the cutting unit. The biasing force may be induced by a spring, which spring biases the knife in the cutting position. The spring may be loaded in the proximal position, and be released upon disconnection of the actuation unit from the cutting unit.

Optionally, the system comprises a latch controller configured for controlling a release of the actuation unit from the cutting unit.

Optionally, the latch controller is arranged along the path of conveyance of the conveyor for selectively interacting with the actuation unit when the actuation unit is conveyed by the conveyor, wherein the latch controller is movable between a first control state for causing a release of the actuation unit from the cutting unit and a second control state for maintaining the actuation unit latched to the cutting unit.

Optionally, the latch controller in the first control state is arranged for causing the release of the actuation unit from the cutting unit for making the preparatory incision, and the latch controller in the second control state is arranged for refraining from releasing the actuation unit latched from the cutting unit for refraining from making the preparatory incision.

Optionally, the system is arranged for determining for each poultry leg individually whether or not to make a preparatory incision, and for each poultry leg individually controlling, with the latch controller, to release or maintain the actuation unit latched to the cutting unit.

Optionally, the secondary guide track is adjustable relative to the conveyor for in the first mode causing the knife to move from the cutting position to the non-cutting position at a first location along the conveyance path, and in the second mode causing the knife to move from the cutting position to the non-cutting position at a second location along the conveyance path different, e.g. downstream or upstream, from the first location. The secondary guide track may hence guide the secondary follower wheel along different paths, so as to actuate the cutting unit accordingly. A location of insertion of the knife into the poultry leg and/or a location of withdrawal of the knife from the poultry leg can hence be controlled by the adjustable secondary guide track.

Optionally, the secondary guide track comprises an upstream section and a downstream section adjustably, e.g. pivotably and/or translatably, connected to the upstream section.

Optionally, the upstream section is substantially invariable in use, wherein the downstream section is movably adjustable relative to the upstream section for in the first mode

Optionally, the upstream section is substantially invariable in use, wherein the downstream section is pivotably drivable relative to the upstream section, the downstream section being slanted with respect to the upstream section in the first mode, and substantially aligned with the upstream section in the second mode. In the first mode, the secondary guide track may form a substantially continuous path for the secondary follower wheel, whereas in the second mode, the secondary guide track may form a discontinuous path for the secondary follower wheel.

Optionally, the primary drive mechanism comprises a stationary primary guide track for guiding a primary follower wheel of the cutting unit to move the cutting unit from the first cutting unit position to the second cutting unit position.

Optionally, the linear guide member and the associated cutting unit is part of a plurality of linear guide members and a plurality of associated cutting units forming a periphery of a rotatable carousel.

Optionally, the conveyor is an overhead conveyor.

Optionally, the conveyor is provided with a height-adjustable bone holder for holding the poultry leg by the first bone at an adjustable distance from the conveyor.

Optionally, the system comprises a sensor for sensing a poultry leg parameter that is relatable to a poultry leg dimension, and a control unit configured for adjusting a holding height of the bone holder relative to the conveyor based on the sensed poultry leg parameter. The poultry leg parameter may be one or more of a length of the first bone, a length of the second bone, a knuckle position, a joint position, an width of the poultry leg, etc.

Optionally, the poultry leg dimension includes a position of the joint between the first bone and the second bone relative to the conveyor and wherein the control unit is configured for adjusting the holding height of the bone holder at which the bone holder holds the poultry leg such that the poultry leg is held by the bone holder with the joint at a predetermined distance from the conveyor. The predetermined distance may be such that the drive mechanism in the second mode initiates the second preparatory incision at the joint.

Optionally, the poultry leg dimension includes a position of the first bone end knuckle, e.g. the ankle knuckle, relative to the conveyor and wherein the control unit is configured for adjusting the holding height of the bone holder at which the bone holder holds the poultry leg such that the poultry leg is held by the bone holder with the first bone end knuckle at a predetermined distance from the conveyor. The predetermined distance may be such that the drive mechanism in the first mode initiates the first preparatory incision at the first bone end knuckle.

Optionally, the system is configured to be set to operate either according to the first mode or according to the second mode, for a plurality of successively conveyed poultry legs.

Optionally, the system is configured for determining for each poultry leg of a plurality of successively conveyed poultry legs independently, whether or not to make the first preparatory incision or the second preparatory incision, and to operate according to the first mode or the second mode accordingly. The system may for instance be configured for accounting for each bone holder, whether the poultry leg held therewith is to be, or has been, incised according to the first mode or the second mode. Each bone holder may for example have a bone holder ID assigned thereto, wherein a the system may be configured to associate a state to each bone holder that is related or relatable to characteristics of the poultry leg held by it and/or processing steps performed on the poultry leg held by it.

Another aspect provides a poultry leg processing line comprising a system as described herein, and a poultry leg meat harvesting system arranged in the conveyance path downstream of said system, for harvesting meat from the poultry leg.

Optionally, the leg meat harvesting system is configured for selectively being in a third mode or a fourth mode, the leg meat harvesting system in the third mode being arranged for extracting meat from the first bone and from the second bone, and the leg meat harvesting system in the fourth mode being arranged for extracting meat from the second bone and not from the first bone. The third mode may be associated with the first mode. For example, leg meat may be extracted from both the first bone and the second bone of a poultry leg if the preparatory incision has been made along the first bone and the second bone. The fourth mode may be associated with the second mode. For example, leg meat may only be extracted from the second bone, not from the first bone, if the preparatory incision has been made only along the second bone, not along the first bone. Hence, the poultry leg can be fully deboned, or only partially using the same machine.

Optionally, the leg meat harvesting system comprises an upstream meat extractor device arranged for, e.g. in the third mode and in the fourth mode, extracting meat from the second bone and not from the first bone, and a downstream meat extractor device, in the conveyance path downstream of the upstream meat extractor device, arranged for extracting meat from the first bone. The downstream meat extractor device is optionally arranged for in the third mode extracting meat from the first bone, and in the fourth mode refraining from extracting meat from the first bone.

Optionally, the downstream meat extractor device in the fourth mode is arranged for ejecting the poultry leg from the conveyor.

Optionally, the upstream meat extractor device has a first claw and a second claw that are movable relative to each other between an open position for receiving the poultry leg and a closed position for engaging, at the joint between the first bone and the second bone, the poultry leg between the first claw and the second claw, wherein the upstream meat extractor device is arranged for, while in the closed position, jointly moving the first claw and the second claw longitudinally of the second bone from the joint to an opposite end of the poultry leg for extracting meat from the second bone.

Optionally, the upstream meat extractor device comprises a height-adjustable knife arranged for making a cut at an adjustable distance from the conveyor at the opposite end of the poultry leg for separating the meat from the second bone.

Optionally, the poultry leg processing line comprises a knife arranged with respect to the conveyance path between the upstream meat extractor device and the downstream meat extractor device, for cutting the poultry leg at the joint between the first bone and the second bone, to separate the second bone from the first bone.

Optionally, the bone holder comprises a shackle for holding the poultry leg by the first bone, and a fixation unit for fixating the poultry leg relative to the shackle, wherein the fixation unit has a first arm and a second arm and an arm drive mechanism for moving the first arm and the second arm relative to the shackle between a passive state for allowing the shackle to receive the poultry leg, and an active state for engaging with the poultry leg between the first arm and the second arm.

Optionally, the first arm and the second arm in the passive state are positioned between the shackle and the conveyor.

Optionally, the arm drive mechanism is formed by a stationary guide track and a follower wheel being guided by the stationary guide track.

Optionally, the bone holder comprises a base member having the shackle mounted thereto, and a movable drive member being movably driveable relative to the base member by the arm drive mechanism, wherein the first arm and the second arm are hingedly connected to the movable drive member.

Another aspect provides a poultry part holder for holding a poultry part, particularly a bone holder for holding a poultry leg, while being conveyed by a conveyor. The bone holder is configured for being mounted to a conveyor, and comprises a shackle for holding a poultry leg hanging from the first bone, and a fixation mechanism for fixating the poultry leg relative to the shackle, wherein the fixation mechanism includes a first arm and a second arm configured for being moved relative to the shackle between a passive state for allowing the shackle to receive the poultry leg, and an active state for engaging with the poultry leg, particularly the first bone, between the first arm and the second arm.

Optionally, a jaw of the first arm and the second arm in the active state are arranged at a side of the shackle opposite to the conveyor.

Optionally, the jaw of the first arm and the second arm in the passive state are arranged between the shackle and the conveyor, and/or level with the shackle relative to the conveyor.

Optionally, the fixation mechanism is associated with a first bone holder follower wheel for being movably driveable by a stationary guide track.

Optionally, the bone holder comprises a base member for being mounted to the conveyor, and a movable drive member connected to the follower wheel for being movably drivable relative to the base member, wherein the first arm and the second arm are hingedly connected to the movable drive member.

Optionally, the shackle is translatably coupled to the base member for allowing a spacing between the shackle and the base member to be adjusted.

Optionally, the shackle is associated with a second bone holder follower wheel for being translatably drivable relative to the base member by an adjustable guide track.

Optionally, the bone holder comprises a brake or latch mechanism configured for, in a closed state, locking the position of the shackle relative to the base member and, in an open state, unlocking the position of the shackle relative to the base member for enabling adjustment of the shackle position relative to the base member.

Optionally, the shackle is rotatably coupled to the base member.

An aspect provides a method comprising conveying the poultry part held by a poultry part holder along a path of conveyance, acquiring an image of the poultry part, and based on the acquired image adjusting a conveyance height of the poultry part holder. The poultry part may in particular be a poultry leg, e.g. as described herein. It will be appreciated that the poultry part holder may be a bone holder as described herein.

According to a further aspect, a method is provided for automatedly making a preparatory incision longitudinally of a poultry leg having a first bone and a second bone articulated by a joint and surrounded by meat using a system such as described herein.

Optionally, the method comprises acquiring an image of the poultry leg and determining, e.g. based on the acquired image, whether to operate the system according to either a first mode for making a first preparatory incision longitudinally of the poultry leg, or according to a second mode for making a second, different, preparatory incision longitudinally of the poultry leg.

Another aspect provides a method for automatedly deboning a poultry leg having a drum bone and a thigh bone articulated by a knee joint and surrounded by meat, for example using a poultry leg processing line as described herein. The method comprises making, e.g. with a system as described herein, a preparatory incision longitudinally of the drum bone and refraining from making a preparatory incision longitudinally of the thigh bone, .

It will be appreciated that any of the aspects, features and options described herein can be combined. It will particularly be appreciated that any of the aspects, features and options described in view of the system apply equally to the processing line, and vice versa. It will also be appreciated that any of the aspects, features and options described in view of the system or processing line apply equally to the methods, and vice versa

### BRIEF DESCRIPTION OF THE DRAWINGS

Embodiments of the present invention will now be described in detail with reference to the accompanying drawings in which:
Figures 1 and 2 show a system for making a preparatory incision longitudinally of a poultry leg;
Figures 3-7 show a cutting unit;
Figures 8-10 show a poultry part holder;
Figure 11 shows a poultry leg processing line.

### DETAILED DESCRIPTION

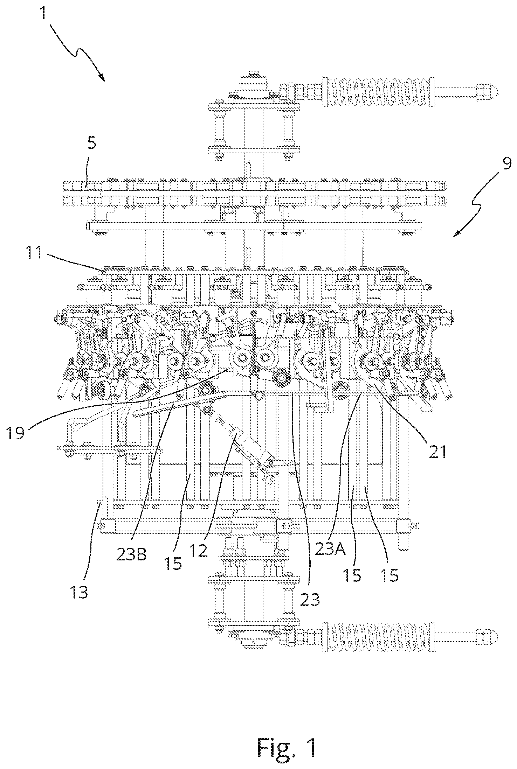

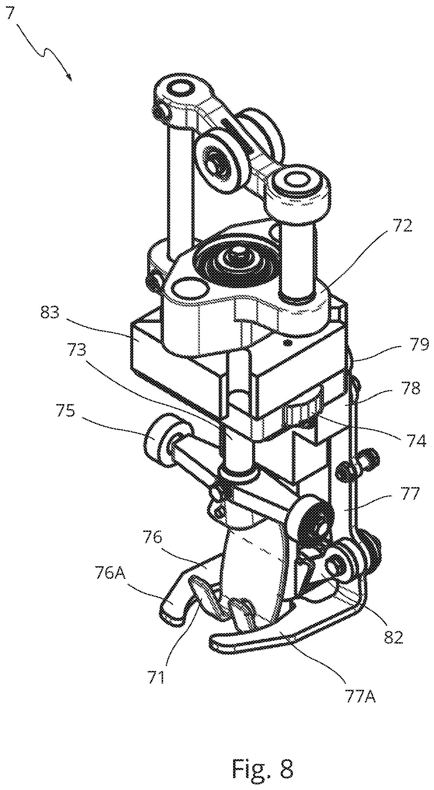

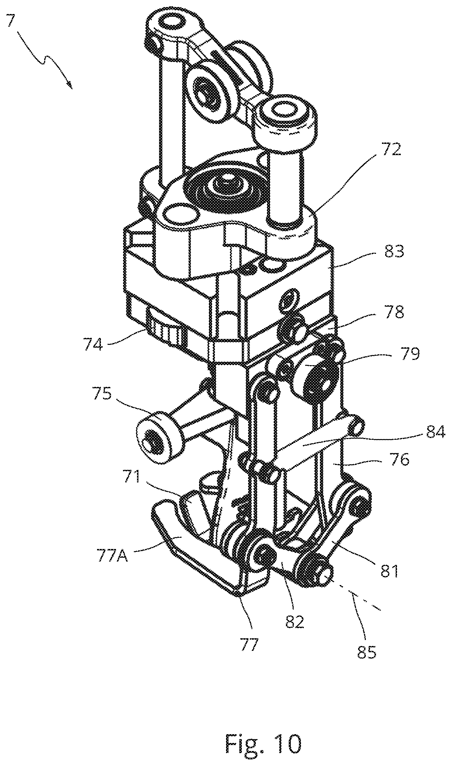

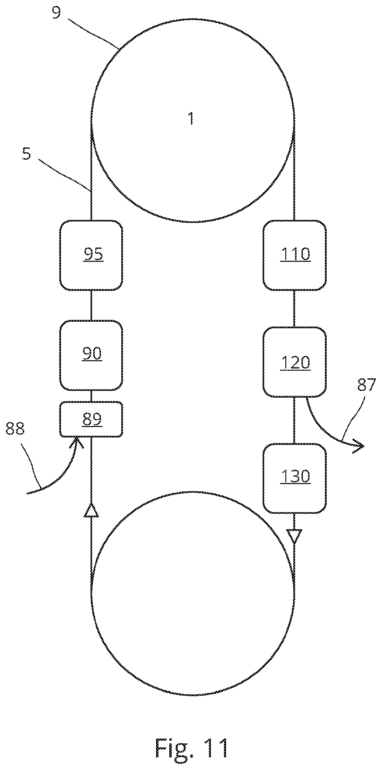

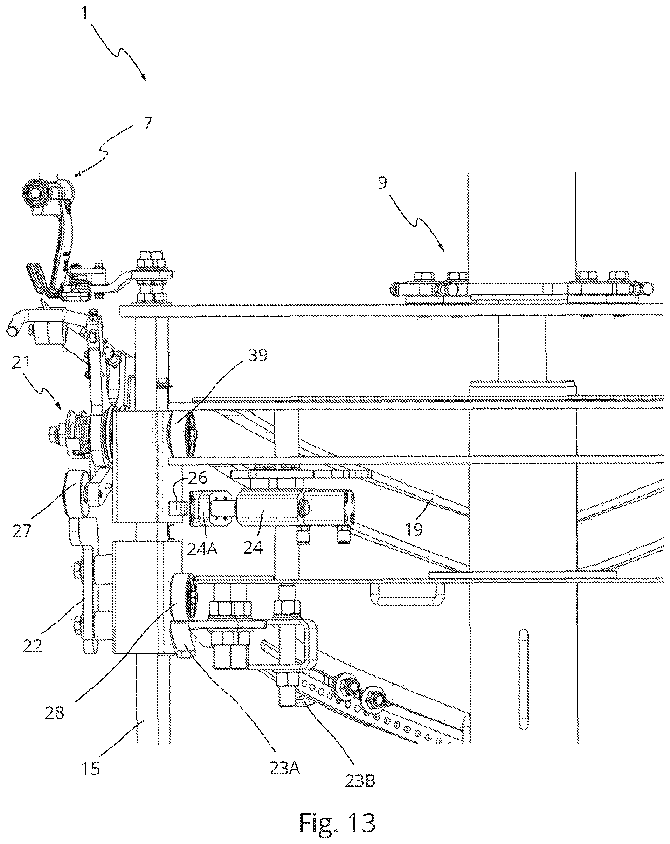

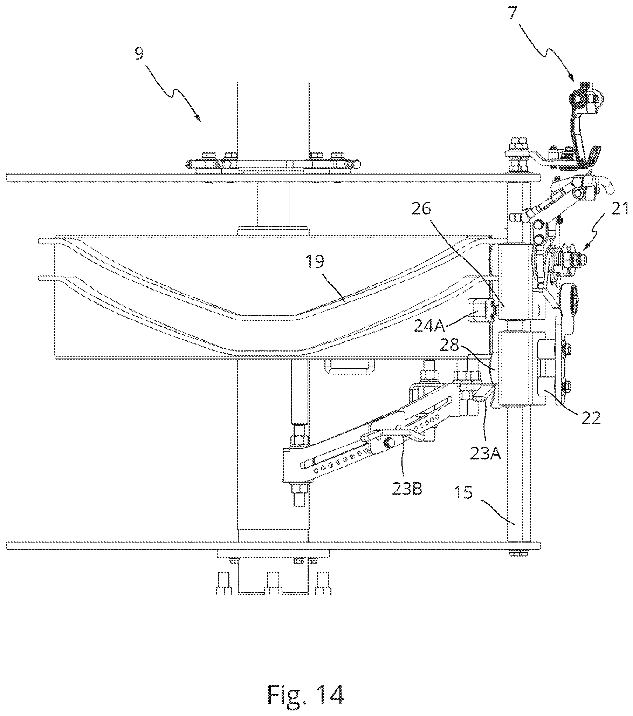

Figures 1 and 2 and figures 12-14 show a system 1 for making a preparatory incision longitudinally of poultry legs. The system 1 is here part of a poultry processing line 100, particularly of a processing line for in-line processing poultry legs such as shown in figure 11. The system 1 is positioned to be joined by an overhead conveyor 5 of the poultry processing line 100. The overhead conveyor 5 has a plurality of bone holders, e.g. including a plurality of suspended shackles, each for carrying a respective poultry leg. An exemplary bone 7 holder for the system 1 is shown in figures 8-10. Each bone holder 7 can hold a poultry leg by the first bone, such that each poultry leg hangs downwardly from the relevant bone holder. Each poultry leg may include a first bone, e.g. a lower leg bone or 'drumstick bone', and a second bone, e.g. an upper leg bone or 'thigh bone', articulated by a joint, e.g. a knee joint.

Here, the conveyor 5 is directed through an end loop by a rotatable carousel 9. The carousel 9 includes an upper disc 11 and a lower disk 13. Pairs of parallel shafts 15 extend between the upper and lower disks 11, 13 at regular intervals about a periphery defined by the outer perimeters of the upper and lower disks 11, 13.

The system 1 comprises a plurality of cutting units 21. Each cutting unit 21 includes a knife 51 for making the preparatory incision. Each cutting unit 21 is in this example associated with a respective pair of shafts 15. The parallel shafts 15 form an example of a linear guide for guiding a movement of the cutting units 21, here in a vertical direction. The cutting units 21 form part of the periphery of the carousel 9, and are movable along with parallel shafts 15 about the carousel rotation axis.

The system 1 comprises a drive mechanism for driving the cutting units 21 for making the preparatory incision. Here, the drive mechanism comprises a primary drive mechanism that comprises a stationary primary guide track 19. The primary guide track 19 is configured for guiding primary follower wheels 39 that may be mounted to the cutting units 21, so as to move the cutting units 21 lengthwise of their associated shafts 15. Each cutting unit 21 is here vertically slidingly engaged on the pair of parallel shafts 15, for up and down movement. This up and down movement is induced by a curveous path defined by the primary guide track 19. The primary guide track 19 is held stationary, while the carousel 9 revolves about it.

The drive mechanism also comprises a secondary drive mechanism here comprising a secondary guide track 23. The secondary guide track 23, here, guides follower wheels 27 that are associated with the cutting units.

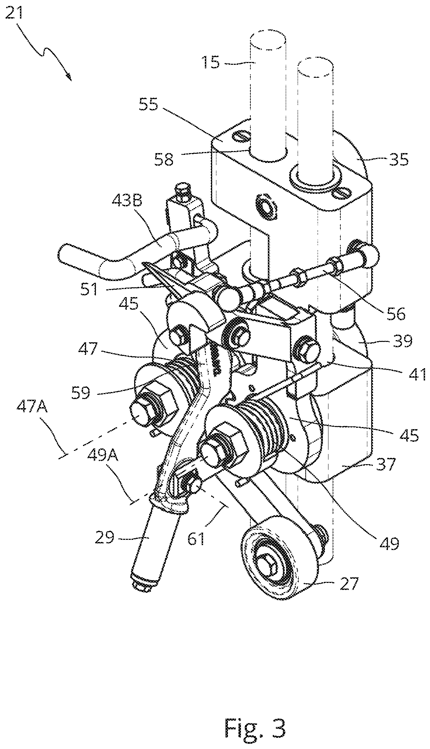

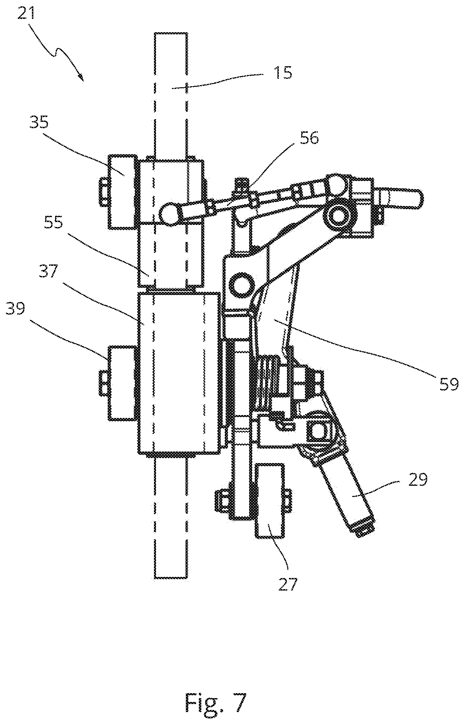

Figures 3-7 show various views of an exemplary cutting unit 21. The cutting unit 21 comprises a slide body 37 that is slidable lengthwise of the parallel shafts 15. The slide body 37 has a pair of vertically extending through bores 41 for receiving therein the paired parallel shafts 15 of the carousel 9. The slide body 37 has a follower wheel 39 mounted thereto, here on the back side of the slide body 37. The primary guide track 19 engages follower wheel 39 associated with the sliding body 37, such that the curveous path defined by the primary guide track 19 moves the slide body 37 lengthwise of the shafts 15.

A guide bar 43 and a knife arm 45 are here pivotally mounted to a front side of the slide body 37. The knife arm 45 includes a knife holder holding a knife 51. The guide bar 43 includes a support rod 43B, which urges the poultry leg towards the knife 51. The guide bar 43 and the knife arm 45 are each biased towards one another by a respective torsion springs 47, 49. The guide bar 43 is pivotable relative to the slide body 37 about a pivot shaft 47A, while knife arm 45 is pivotable relative to the slide body about pivot shaft 49A. Movement of the guide bar 43 and the knife arm 45 is controlled to be simultaneous by means of inter-engaging toothed segments, 43A and 45A respectively. The guide bar 43 includes a support rod 43B, which urges the poultry leg (not shown) towards the knife 51.

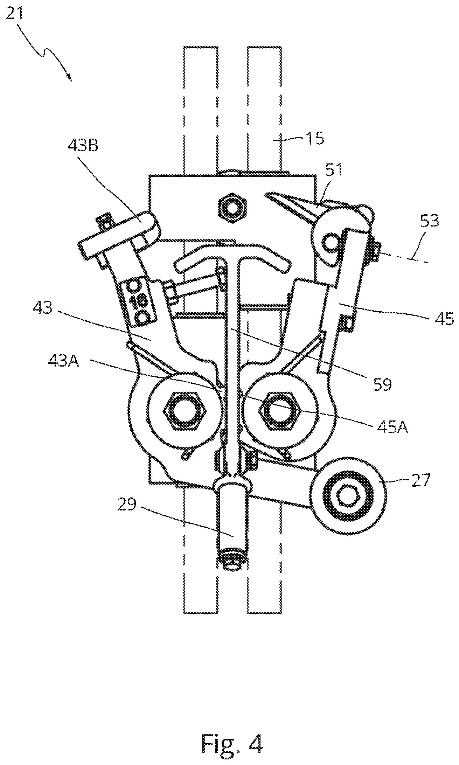

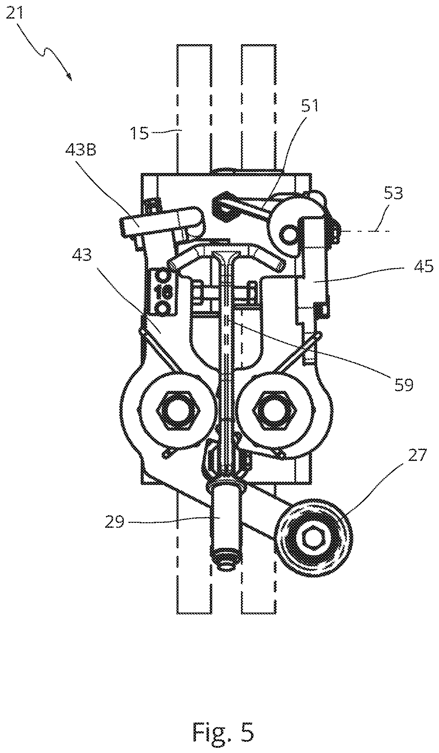

The cutting unit 21 is movable between a non-cutting position, here a receiving position, e.g. as shown in figure 4, for receiving the poultry leg and a cutting position, e.g. as shown in figure 5, for making the preparatory incision. In the receiving position, the guide bar 43 and the knife arm 45 are spread for allowing poultry leg to be received between the guide bar 43 and the knife arm 45. The guide bar 43 and knife arm 45 being spread is a result of the follower wheel 27 being lifted by the secondary guide track 23. In the cutting position, the guide bar 43 and the knife arm 45 are pivoted towards one another for inserting the knife 51 into the received poultry leg. The guide bar 43 and knife arm 45 being pivoted toward each other is a result of the follower wheel 27 being released from the secondary guide track 23, enabling the guide bar 43 and knife arm 45 to be forced towards each other by the torsion springs 47, 49. It will be appreciated that other configurations may also be used, e.g. wherein springs urge the guide bar 43 and the knife arm 45 away from each other, and wherein the secondary guide track 23 drives the knife arm 45 and the guide bar 43 towards each other against the force of the springs 47, 49.

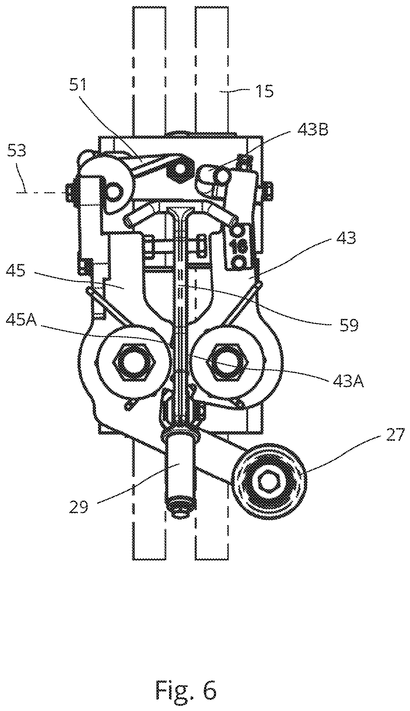

The cutting units 21 shown in figures 5 and 6 are mirrored with respect to one another and configured for incising a respective one of a right and left poultry leg. In the system 1, left cutting units 21 and right cutting units 21 may be arranged alternatingly. Other arrangement are also envisioned.

The knife 51 of the cutting unit 21 is in this example pivotally mounted to the knife arm 45 for directing its cutting edge about pivot axis 53. The pivoting movement of the cutting knife 51 is controlled by a following wheel 35 acting on a knife adjuster slide body 55. A knife adjuster arm 56 connects the knife adjuster slide body 55 and the knife 51, and has an adjustable length. The knife adjuster slide body 55 is slidable lengthwise of the vertical shafts 15. Hereto, the knife adjuster slide body 55 has a pair of vertically extending through bores 58 for receiving therein the paired parallel shafts 15 of the carousel 9. The slide body 37 and the knife adjuster slide body 55 are movable relative and independently from one another along the shafts 15.

Here, the secondary guide track 23 also guides a positioner roller 29 of the cutting units 21 during a portion of its revolution. The positioner roller 29 controls a leg positioner arm 59, which pivots inwardly and outwardly from the slide body 37 about a pivot axis 61.

The drive mechanism is arranged for selectively being in a first mode for making a first preparatory incision longitudinally of the poultry leg or a second mode for making a second preparatory incision longitudinally of the poultry leg. In these examples, the secondary drive mechanism includes an adjustable secondary guide track 23, for selectively transitioning the drive mechanism of the system 1 between the first mode and the second mode. The secondary guide track 23 hence defines an adjustable path for a follower wheel.

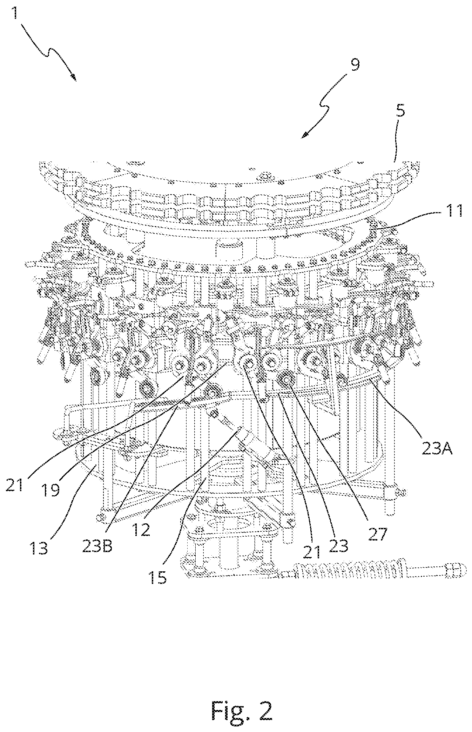

In the example of figures 1 and 2, the secondary guide track 23 defines an adjustable path for the follower wheel 27. Here, the secondary guide track 23 has a fixed upstream section 23A and a movable downstream section 23B, wherein the movable downstream section 23B is pivotably movable relative to the fixed upstream section 23A. The system 1 comprises an actuator 12, here a linear actuator, for pivoting the downstream section 23A relative to the upstream section 23A. By actuating the downstream section 23B of the secondary guide track 23, the trajectory of the path defined by the secondary guide track 23 can be altered. Here, the fixed upstream section 23A engages and lifts the follower wheel 27 of the cutting unit 21 for maintaining the cutting unit 21 in the receiving position. The downstream section 23B can be aligned with the upstream section 23A to effectively extend the engagement of the follower wheel 27 and hence maintain the cutting unit 21 in the receiving position for a larger extent of the conveyance path. This arrangement may correspond to the first mode. The downstream section 23B can also be pivoted away from the cutting unit 21, here downwardly, to effectively shorten the engagement of the follower wheel 27 and hence release the follower wheel 27 earlier, here at the pivot between the upstream section 23A and the downstream section 23B. This arrangement may correspond to the second mode. Hence, the secondary guide track 23 can be adapted to selectively retard a transitioning of the cutting unit 21 from the receiving position to the cutting position. It will be appreciated that the secondary guide track 23 may similarly be configured for retarding or advancing a transitioning of the cutting unit 21 from the cutting position to the receiving position.

As the primary guide track 19 can drive the sliding body 37 downwardly along the shafts 15, the location on the poultry leg at which the preparatory incision is initiated can be selectively altered. For example, in the first mode, the knife 51 can be inserted into the poultry leg at a free end of the first bone opposite the joint, e.g. at the ankle knuckle, where the poultry leg is held by the bone holder. Once inserted, the primary drive mechanism drives the cutting unit so as to make the first preparatory incision longitudinally of the first bone and longitudinally of the second bone. In the second mode, the transitioning into the cutting position is in this example effectively retarded compared to the first mode, such that the slide body 37 has advanced downwardly along the shafts 15. The knife 51 can accordingly be inserted into the poultry leg at the joint, and once inserted, the primary drive mechanism can drive the cutting unit so as to make the second preparatory incision longitudinally of the second bone only. The first bone can hence be selectively passed by the knife 51. The meat associated with the first bone, e.g. the drum meat, may hence remain substantially intact, which may be desirable for later processing steps.

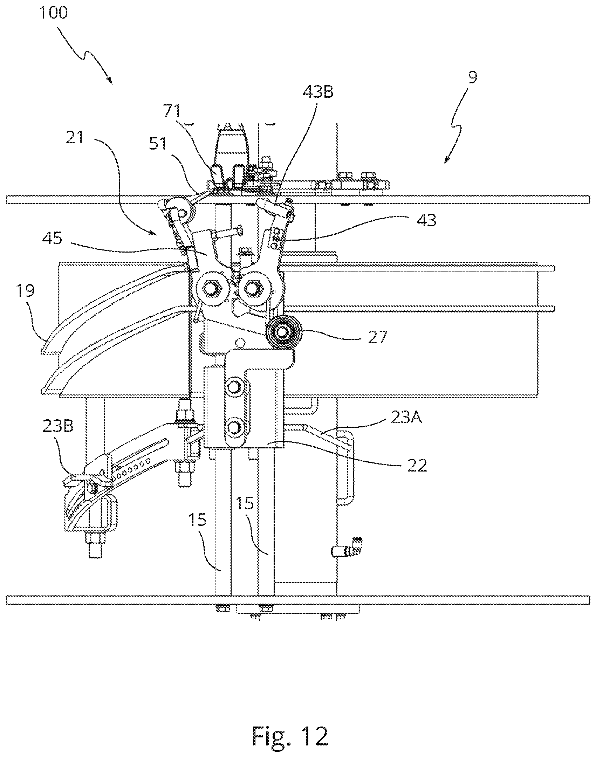

In the example of figures 12-14, the secondary guide track 23 defines an adjustable path for follower wheel 28. Follower wheel 28 is mounted to an optional actuation unit 22 of the system 1. The actuation unit 22 is associated with the parallel shafts 15 for being moved lengthwise thereof by the secondary guide track 23. The actuation unit 22 is movable with respect to the cutting unit 21 between a proximal position where the actuation unit 22 is proximate to the cutting unit 21 as shown in figures 12-14, and a distal position where the actuation unit is distal from the cutting unit 21. In the proximal position, the cutting unit 21 is in the non-cutting position. Here, the actuation unit 22 in the proximal position engages the follower wheel 27 to keep the follower wheel 27 in lifted position, thus causing the knife 51 to be in the non-cutting position. In the distal position, the actuation unit 22 disengages from the follower wheel 27, allowing the knife 51 to move to the cutting position under influence of the spring force induced by torsion springs 47, 49. Hence, in the example of figures 1 and 2 the follower wheel 27 engages the secondary guide track 23, the example of figures 12-14 includes the actuation unit 22 between the follower wheel 27 and the secondary guide track 23. The provision of the actuation unit 21 can reduce or eliminate wear on the secondary guide track 23, as follower wheel 28 is substantially vertically aligned with the cutting unit 21, as opposed to the off-centred follower wheel 27.

In this example, the actuation unit 22 is releasably couplable to the cutting unit 21 in the proximal position. In the coupled state, as shown in figures 12-14, the actuation unit 22 locks the knife 51 in the non-cutting position, here by keeping the follower wheel 27 in lifted position. The actuation unit 22 can be selectively decoupled from the cutting unit 21. Upon decoupling the actuation unit 22 from the cutting unit 21, the actuation unit 22 is pushed downward the loaded torsion springs 47, 49, thus allowing the knife 51 to move under influence of the springs 47, 49 to the cutting position.

In this example, system comprises a controller 24 for selectively decoupling the actuation unit 22 from the cutting unit 21. The controller 24 is arranged along the path of conveyance of the conveyor for interacting with a release mechanism for releasing the actuation unit 22 from the cutting unit 21. Here, the controller 24 comprises an movable actuation element 24A for engaging an engagement element 26 of the release mechanism. The engagement element 26 is in this example provided on the cutting unit 21. In a first control state of the controller 24, the actuation element 24A is positioned for engaging the engagement element 26. Hence, if the cutting unit 21 is conveyed past the controller 24 being in the first control state, the actuation element 24A engages the engagement element 26 so as to trigger the release mechanism to decouple the actuation unit 22 from the cutting unit 21. In a second control state of the controller 24, the actuation element 24A is withdrawn to not engage the engagement element 26. Hence, if the cutting unit 21 is conveyed past the controller 24 being in the second control state, the actuation element 24A does not engage the engagement element 26, and hence does not trigger the release mechanism. With the controller in the second control state, the actuation unit 22 hence remains coupled to the cutting unit 21, such that the knife 51 is consequently maintained in the non-cutting position. Hence, the system 1 is here arranged for selectively being in a cutting mode for making a preparatory incision, e.g. according to the first mode or the second mode, or a non-cutting mode for refraining from making a preparatory incision.

The example of figures 12-14 is in this example furthermore adjustable to operate according to the first mode or the second mode as described in view of the example of figures 1 and 2. Here, the secondary guide track 23 has an optional upstream section 23A at the location of the controller 24 to reduce loads on the release mechanism. The upstream section 23A may however be omitted. The, here downstream section 23B of the, secondary guide track 23 is adjustable, for having the system 1 operate according to the first mode or the second mode as described in view of the example of figures 1 and 2. Compared to the figures 1 and 2, the, here downstream section 23B of the, secondary guide track 23 is translatably adjustable.

Compared to the example as shown in figures 1 and 2, the drive mechanism, particularly the secondary guide track 23, of the example shown in figures 12-14 is arranged for changing a position where the knife 51 is moved from the cutting position to the non-cutting position. Hence, here, in the first mode and in the second mode, the knife 51 is inserted into the poultry leg at a free end of the first bone opposite the joint, e.g. at the ankle knuckle. Once inserted, the primary drive mechanism drives the cutting unit so as to make a preparatory incision longitudinally of the poultry leg. The secondary guide track 23 is adjustable such that the withdrawal of the knife 51 from the poultry leg to terminate the incising is controlled. Hence, in this example, a location of withdrawal of the knife 51 from the poultry leg differs between the first mode and the second mode. Hence, a termination point of the preparatory incision can be adjusted. It will be appreciated that the secondary guide track 23 can similarly be used for controlling a location of insertion of the knife 51 into the poultry leg.

It will be appreciated that the examples of figures 1 and 2 on the one hand and figures 12-14 on the other hand can be combined. For example, the example of figures 1 and 2 may be provided with an actuation unit 22 such as described in view of figures 12-14. Also, for example, the system 1 may be provided with a secondary drive mechanism arranged for controlling a location of insertion of the knife 51 into the poultry leg as described in view of figures 1 and 2, as well as arranged for controlling a location of withdrawal of the knife from the poultry leg as described in view of figures 12-14.

The system 1 may be set to operate either according to the first mode or according to the second mode, for a batch of poultry legs. Alternatively, the system 1 determine for each poultry leg of a batch individually, whether or not to make the first preparatory incision or the second preparatory incision, and to operate according to the first mode or the second mode accordingly. The system 1 may for instance be configured for accounting for each bone holder 7, whether the poultry leg has been incised according to the first mode or the second mode, to adapt further processing of the poultry leg accordingly.

The system 1 of this example further comprises an optional height-adjustable bone holder 7 for holding the poultry leg while being conveyed by the conveyor 5 at an adjustable height. This way, differences in shapes and sizes between poultry legs may be efficiently accounted for. The height-adjustable bone holder 7 is configured for adjusting a spacing of the poultry leg relative to the conveyor 5, particularly such that the joint between the first bone and the second bone, e.g. the knee joint, is at a predetermined fixed vertical spacing from the conveyor 5. Additionally or alternatively, the secondary guide track 23 may be controlled in such way that the follower wheel 27 is released at an appropriate location, in accordance with the joint position of the joint between the first and second bones.

To determine the joint position of the poultry leg, e.g. relative to the conveyor, the system 1 comprises a sensor 90, particular an optical sensor, here an X-ray sensor. The sensor 90 acquires an image of the poultry leg being held and conveyed by the bone holder 7, and based on the image a position of the joint can be determined. It will be appreciated that the joint position can be automatically determined in various ways, and based on various parameters of the poultry leg. The holding height of each bone holder 7 can be individually controlled, in dependence on the poultry leg it holds.

Figures 8-10 show an example of a height-adjustable bone holder 7, that can for example be used in a system 1 as described herein. The bone holder 7 comprises a shackle 71 for suspending the poultry leg from the first bone, particularly by engaging first bone by a knuckle, e.g. the ankle knuckle, at an end of the first bone. The shackle 71 is coupled to a base member 72 that is associated with or mountable to a conveyor 5. Here, the base member 72 is formed by a link of the conveyor 5. The shackle 71 of this example is translatable relative to the base member 72, for adjusting a spacing between the shackle 71 and the base member 72. In this example, the shackle 71 is mounted to the base member 72 via a toothed shaft 73. A latch mechanism cooperates with the toothed shaft 73 for locking and unlocking the shaft 73 relative to the base member 72. The latch mechanism may be operated via operating organ 74.

The spacing between the shackle 71 and the base member 72 may be adjusted by means of the follower wheels 75 that are engagingly guided by an adjustable height adjuster guide track. The height adjuster guide track may for example have an adjustable ramp.

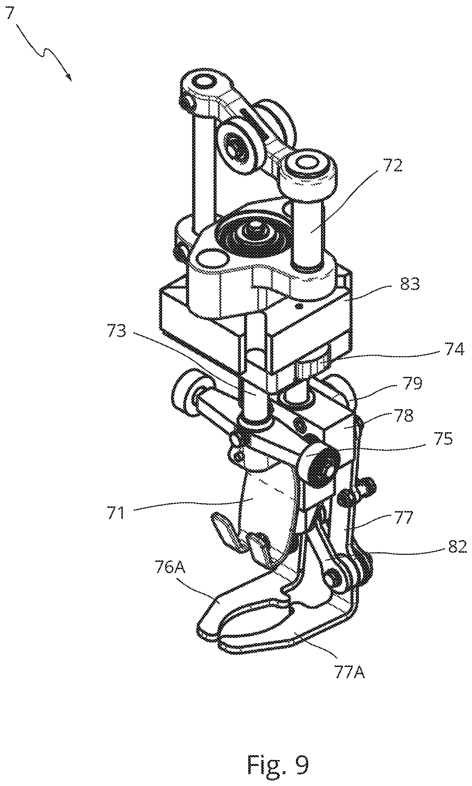

The bone holder 7 in this example comprises a leg fixation mechanism for fixating the poultry leg relative to the shackle. The leg fixation mechanism includes a first arm 76 and a second arm 77 configured for being moved relative to the shackle 71 between a passive state, e.g. as shown in figure 8, for allowing the shackle 71 to receive the poultry leg, and an active state, e.g. as shown in figure 9, for clamping the poultry leg, particularly the first bone, between jaws 76A, 77A of the first arm 76 and the second arm 77. In the active state, the jaws 76A, 77A of the first arm 76 and the second arm 77 are positioned with respect to the conveyor 5 beyond the shackle 71. The jaws 76A, 77A of the first arm 77 and the second arm 78 in the passive state are here arranged between the shackle 71 and the conveyor 5. Here, the bone holder 7 comprises a slide body 78 connected to a follower wheel 79 for being movably slidable relative to the base member 72 along a linear guide of the bone holder. The first arm 76 and the second arm 77 are hingedly connected to the movable drive member 78. The movable drive member 78 is driven, by means of the follower wheel 79 and an associated stationary guide track. The bone holder 7 also comprises auxiliary pivot arms 81, 82 respectively pivotably coupled to the first arm 76 and the second arm 77, for moving the first arm 76 and the second arm 77 laterally apart from each other when moving between passive state and the active state. The auxiliary pivot arms 81, 82 are further pivotable about a common pivot axis 85. The common pivot axis 85 extends transverse to the toothed shaft 73. In the passive state, the jaws 76A, 77A are positioned on one side of the common pivot axis 85, and in the active state, the jaws 76A, 77A are positioned on an opposite side of the common pivot axis. A spring 84 is provided for biasing the first jaw 76A and the second jaw 77A toward each other, particularly in both the passive state and the active state. The fixation mechanism particularly has two stable states, corresponding to the active and the passive state respectively.

The bone holder 7 in this example also comprises turning member 83, configured for rotating the bone holder 7 about a vertical axis relative to the conveyor 5. The turning block 83 is configured for being engaged by a stationary engagement member for driving the rotation about the vertical axis. The turning block 83 is rotatably mounted to the base member 72.

The bone holder 7 may be selectively in the active or passive state depending on the processing step performed on the poultry leg. For example, while making the preparatory incision longitudinally of the poultry leg, the bone holder 7 may be in the passive state, to enable full access to the poultry leg. For example, in a meat harvesting step, e.g. following the preparatory incising, the bone holder 7 may be in the active state for providing a suitable fixation of the poultry leg.

Figure 11 shows an example of a poultry leg processing line 100, for in-line processing poultry legs. The processing line comprise a conveyor 5 for conveying poultry legs, or parts thereof, along a conveyance path that coincides with various processing systems. In this example, poultry legs are transferred from an infeed line 88, wherein the poultry legs are transferred to the conveyor 5 at a transfer station 89.

Here, the processing line 100 comprises a system 1 for making a preparatory incision longitudinally of a poultry leg as described herein, here associated with a rotatable carousel 9. The sensor 90 is arranged upstream of the rotatable carousel 9, for acquiring an image of the poultry leg, here for use in determining a joint position of the poultry leg. The bone holder 7 may for example adjust a height of the shackle 71 accordingly, upstream of the carousel 9. Hereto, the system includes a height adjuster system 95 in which the bone holder 7 is adjusted based on the sensor-acquired image of the poultry leg.

Downstream of the incising system 1, a leg meat harvesting system 110 is arranged, configured for harvesting meat from the poultry leg. The leg meat harvesting system 110 in this example is particularly arranged for harvesting meat from the second bone only, i.e. not from the first bone. The leg meat harvesting system 110 includes a pair of claws for engaging the poultry leg at the joint between the first bone and the second bone, and for jointly moving along the second bone for stripping down the meat from the second bone. The striped-down leg meat that may still hang form the second bone, can subsequently be detached by a harvesting knife. The leg meat harvesting system 110 may for example be similar as described in WO2020/162757 A2.

In this example, the harvesting knife is height-adjustable, so as to be suitably positioned relative to the conveyor for cutting close to the end of the second bone, but without cutting in the second bone. The height of the harvesting knife may be adjusted based on the sensor-acquired image of the poultry leg. While harvesting leg meat from the second bone, the bone holder 7 may be in the active state, for fixating the poultry leg.

After the meat is extracted from the second bone, the second bone may be separated from the first bone by bone separation knife. In this example, the bone separation knife is height-adjustable, so as to be suitably positioned relative to the conveyor for cutting at the joint between the first bone and the second bone, without cutting in the first bone nor the second bone. The height of the bone separation knife may be adjusted based on the sensor-acquired image of the poultry leg. While harvesting leg meat from the second bone, the bone holder 7 may be in the active state, for fixating the poultry leg.

Downstream of the leg meat harvesting system 110, the poultry leg processing line 110 in this example comprises a poultry leg ejector device 120. The ejector device 120 is configured for selectively ejecting the poultry leg from the bone holder 7, particularly depending on whether the poultry leg has been incised by the upstream incising system 1 according to the first mode or the second mode. For example, in case the system 1 operates according to the first mode, the ejector device 120 refrains from ejecting the poultry leg, whereas in case the system 1 operates according to the second mode, the ejector device 120 ejects the poultry leg from the bone holder 7. As described herein, in the first mode, the system 1 makes the first preparatory incision along the first bone and the second bone, while in the second mode the system 1 makes a preparatory incision along only the second bone, not along the first bone. Hence, in case the system 1 has refrained from incising along the first bone, e.g. in the second mode, a first leg portion associated with the first bone, e.g. the drum or drumstick, may be substantially intact. In some instances it may be desirable to refrain from deboning this, e.g. drum, section of the poultry leg. Hence, the ejector device 120 may eject the poultry leg from the bone holder 7, to avoid the poultry leg from being conveyed by the conveyor 5 to a subsequent leg meat harvesting system 130 that is arranged for harvesting meat associated with the first bone of the poultry leg. It will be appreciated that the poultry leg may at this stage of the processing line 100 may include the first bone and the second bone, or only the first bone when the second bone has been removed at the upstream harvesting system 110. The ejected poultry legs may be transported for optional further processing via an outfeed line 87. Poultry legs that are not ejected by the ejector device 120 may be conveyed further by the conveyor 5, to be deboned by the downstream meat harvesting system 130.

Herein, the invention is described with reference to specific examples of embodiments of the invention. It will, however, be evident that various modifications and changes may be made therein, without departing from the scope of the invention as set out in the appended claims. For the purpose of clarity and a concise description features are described herein as part of the same or separate embodiments, however, alternative embodiments having combinations of all or some of the features described in these separate embodiments are also envisaged.

However, other modifications, variations, and alternatives are also possible. The specifications, drawings and examples are, accordingly, to be regarded in an illustrative sense rather than in a restrictive sense.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A system (1) for making a preparatory incision longitudinally of a poultry leg having a first bone and a second bone articulated by a joint and surrounded by meat, the system comprising
a cutting unit (21) having a knife (51), and
a conveyor (5) for conveying the poultry leg along a conveyance path coincident with the cutting unit;
the system (1) being **characterised by** further comprising:
a drive mechanism arranged for selectively being in a first mode or a second mode,
the drive mechanism in the first mode being configured for driving the cutting unit (21) to move the knife along a predefined first cutting trajectory for making a first preparatory incision longitudinally of the poultry leg, and
the drive mechanism in the second mode being configured for driving the cutting unit (21) so as to move the knife along a predefined second cutting trajectory, different from the first cutting trajectory, for making a second preparatory incision longitudinally of the poultry leg.

2. The system of claim 1, wherein the drive mechanism in the first mode is arranged for moving the knife (51) between a cutting position for performing the first preparatory incision to non-cutting position, and wherein the drive mechanism in the second mode is arranged for, with respect to the first mode, retarding and/or advancing the movement of the knife between the cutting position to the non-cutting position.

3. The system according to claim 1 or claim 2, wherein the first preparatory incision is a preparatory incision of a first length, and wherein the second preparatory incision is of the second length different from the first length.

4. The system according to any preceding claim, wherein the conveyor (5) is an overhead conveyor, and wherein the conveyor is provided with a height-adjustable bone holder (7) for holding the poultry leg by the first bone at an adjustable distance from the conveyor.

5. The system according to claim 4, comprising a sensor (90) for sensing a poultry leg parameter that is relatable to a poultry leg dimension, and a control unit configured for adjusting a holding height of the bone holder (7) relative to the conveyor (5) based on the sensed poultry leg parameter.

6. The system according to claim 5, wherein the poultry leg dimension includes a position of the joint between the first bone and the second bone relative to the conveyor and wherein the control unit is configured for adjusting the holding height of the bone holder such that the poultry leg is held by the bone holder with the joint at a predetermined distance from the conveyor.

7. A poultry leg processing line (100) comprising a system (1) according to any preceding claim and a poultry leg meat harvesting system (110) arranged in the conveyance path downstream of said system, for harvesting meat from the poultry leg.

8. The poultry leg processing line according to claim 7, wherein the leg meat harvesting system (110) comprises an upstream meat extractor device arranged for extracting meat from the second bone and not from the first bone, and a downstream meat extractor device, in the conveyance path downstream of the upstream meat extractor device, arranged for extracting meat from the first bone.

9. The poultry leg processing line according to claim 8, wherein the upstream meat extractor device has a first claw and a second claw that are movable relative to each other between an open position for receiving the poultry leg and a closed position for engaging, at the joint between the first bone and the second bone, the poultry leg between the first claw and the second claw, wherein the upstream meat extractor device is arranged for, while in the closed position, jointly moving the first claw and the second claw longitudinally of the second bone from the joint to an opposite end of the poultry leg for extracting meat from the second bone.

10. The poultry leg processing line according to claim 9, wherein the upstream meat extractor device comprises a height-adjustable knife arranged for making a cut at an adjustable distance from the conveyor at the opposite end of the poultry leg for separating the meat from the second bone.

11. The poultry leg processing line according to any of claims 7-10, comprising a knife arranged with respect to the conveyance path between the upstream meat extractor device and the downstream meat extractor device, for cutting the poultry leg at the joint between the first bone and the second bone, to separate the second bone from the first bone.

12. The poultry leg processing line according to any of claims 7-11, when depending on claim 4, wherein the bone holder (7) comprises a shackle (71) for holding the poultry leg by the first bone, and a fixation unit for fixating the poultry leg relative to the shackle, wherein the fixation unit has a first arm (76) and a second arm (77) and an arm drive mechanism for moving the first arm and the second arm relative to the shackle between a passive state for allowing the shackle to receive the poultry leg, and an active state for engaging with the poultry leg between the first arm (76) and the second arm (77).

13. The poultry leg processing line according to claim 12, wherein the arm drive mechanism is formed by a stationary guide track and a follower wheel being guided by the stationary guide track.

14. The poultry leg processing line according to any of claims 12-13, wherein the bone holder comprises a base member (72) having the shackle (71) mounted thereto, and a movable drive member (78) being movably driveable relative to the base member (72) by the arm drive mechanism, wherein the first arm and the second arm are hingedly connected to the movable drive member (78).

15. A method for automatedly making a preparatory incision longitudinally of a poultry leg having a first bone and a second bone articulated by a joint and surrounded by meat using a system (1) according to any of claims 1-6 and/or a processing line (100) according to any of claims 7-14.

## Patentansprüche

1. System (1) zum Herstellen eines vorbereitenden Einschnitts in Längsrichtung eines Geflügelbeins, das einen ersten Knochen und einen zweiten Knochen aufweist, die durch ein Gelenk miteinander verbunden und von Fleisch umgeben sind, wobei das System Folgendes umfasst
eine Schneideinheit (21), die eine Klinge (51) aufweist, und
einen Förderer (5) zum Fördern des Geflügelbeins entlang eines Förderwegs, der mit der Schneideinheit zusammenfällt;
wobei das System (1) **dadurch gekennzeichnet ist, dass** es ferner Folgendes umfasst:
einen Antriebsmechanismus, der dazu eingerichtet ist, sich selektiv in einem ersten Modus oder einem zweiten Modus zu befinden,
wobei der Antriebsmechanismus in dem ersten Modus dazu konfiguriert ist, die Schneideinheit (21) anzutreiben, um die Klinge entlang einer vordefinierten ersten Schneidbahn zu bewegen, um einen ersten vorbereitenden Einschnitt in Längsrichtung des Geflügelbeins herzustellen, und
wobei der Antriebsmechanismus in dem zweiten Modus dazu konfiguriert ist, die Schneideinheit (21) derart anzutreiben, dass die Klinge entlang einer vordefinierten zweiten Schneidbahn, die sich von der ersten Schneidbahn unterscheidet, bewegt wird, um einen zweiten vorbereitenden Einschnitt in Längsrichtung des Geflügelbeins herzustellen.

2. System nach Anspruch 1, wobei der Antriebsmechanismus in dem ersten Modus dazu eingerichtet ist, die Klinge (51) zwischen einer Schneidposition zum Durchführen des ersten vorbereitenden Einschnitts und einer Nicht-Schneidposition zu bewegen, und wobei der Antriebsmechanismus in dem zweiten Modus dazu eingerichtet ist, in Bezug auf den ersten Modus die Bewegung der Klinge zwischen der Schneidposition und der Nicht-Schneidposition zu verzögern und/oder vorzuziehen.

3. System nach Anspruch 1 oder Anspruch 2, wobei der erste vorbereitende Einschnitt ein vorbereitender Einschnitt mit einer ersten Länge ist, und wobei der zweite vorbereitende Einschnitt eine zweite Länge, die sich von der ersten Länge unterscheidet, aufweist.

4. System nach einem vorstehenden Anspruch, wobei der Förderer (5) ein Hängeförderer ist, und wobei der Förderer mit einem höhenverstellbaren Knochenhalter (7) zum Halten des Geflügelbeins an dem ersten Knochen in einem einstellbaren Abstand von dem Förderer versehen ist.

5. System nach Anspruch 4, das einen Sensor (90) zum Abtasten eines Geflügelbeinparameters der mit einer Geflügelbeindimension in Beziehung steht, umfasst, und eine Steuereinheit, die dazu konfiguriert ist, eine Haltehöhe des Knochenhalters (7) relativ zu dem Förderer (5) basierend auf dem abgetasteten Geflügelbeinparameter einzustellen.

6. System nach Anspruch 5, wobei die Geflügelbeindimension eine Position des Gelenks zwischen dem ersten Knochen und dem zweiten Knochen relativ zu dem Förderer beinhaltet, und wobei die Steuereinheit dazu konfiguriert ist, die Haltehöhe des Knochenhalters derart einzustellen, dass das Geflügelbein von dem Knochenhalter mit dem Gelenk in einem vorbestimmten Abstand von dem Förderer gehalten wird.

7. Geflügelbeinverarbeitungslinie (100), die ein System (1) nach einem der vorstehenden Ansprüche und ein Geflügelbeinfleischgewinnungssystem (110) umfasst, das in dem Förderweg stromabwärts des Systems zum Gewinnen von Fleisch von dem Geflügelbein eingerichtet ist.

8. Geflügelbeinverarbeitungslinie nach Anspruch 7, wobei das Geflügelbeinfleischgewinnungssystem (110) eine stromaufwärtige Fleischextraktorvorrichtung umfasst, die dazu eingerichtet ist, Fleisch von dem zweiten Knochen und nicht von dem ersten Knochen zu extrahieren, und eine stromabwärtige Fleischextraktorvorrichtung in dem Förderweg stromabwärts der stromaufwärtigen Fleischextraktorvorrichtung, die dazu eingerichtet ist, Fleisch von dem ersten Knochen zu extrahieren.

9. Geflügelbeinverarbeitungslinie nach Anspruch 8, wobei die stromaufwärtige Fleischextraktorvorrichtung eine erste Klaue und eine zweite Klaue aufweist, die relativ zueinander zwischen einer offenen Position zum Aufnehmen des Geflügelbeins und einer geschlossenen Position bewegbar sind, in der das Geflügelbein an dem Gelenk zwischen dem ersten Knochen und dem zweiten Knochen zwischen der ersten Klaue und der zweiten Klaue ergriffen wird, wobei die stromaufwärtige Fleischextraktorvorrichtung dazu eingerichtet ist, während sie sich in der geschlossenen Position befindet, die erste Klaue und die zweite Klaue gemeinsam in Längsrichtung des zweiten Knochens von dem Gelenk zu einem entgegengesetzten Ende des Geflügelbeins zum Extrahieren von Fleisch von dem zweiten Knochen zu bewegen.

10. Geflügelbeinverarbeitungslinie nach Anspruch 9, wobei die stromaufwärtige Fleischextraktorvorrichtung eine höhenverstellbare Klinge umfasst, die dazu eingerichtet ist, einen Schnitt in einem einstellbaren Abstand von dem Förderer an dem entgegengesetzten Ende des Geflügelbeins zum Trennen des Fleisches von dem zweiten Knochen durchzuführen.

11. Geflügelbeinverarbeitungslinie nach einem der Ansprüche 7 bis 10, die eine Klinge umfasst, die in Bezug auf den Förderweg zwischen der stromaufwärtigen Fleischextraktorvorrichtung und der stromabwärtigen Fleischextraktorvorrichtung angeordnet ist, um das Geflügelbein an dem Gelenk zwischen dem ersten Knochen und dem zweiten Knochen zu schneiden, um den zweiten Knochen von dem ersten Knochen zu trennen.

12. Geflügelbeinverarbeitungslinie nach einem der Ansprüche 7 bis 11, wenn abhängig von Anspruch 4, wobei der Knochenhalter (7) einen Schäkel (71) zum Halten des Geflügelbeins an dem ersten Knochen und eine Fixiereinheit zum Fixieren des Geflügelbeins relativ zu dem Schäkel umfasst, wobei die Fixiereinheit einen ersten Arm (76) und einen zweiten Arm (77) sowie einen Armantriebsmechanismus zum Bewegen des ersten Arms und des zweiten Arms relativ zu dem Schäkel zwischen einem passiven Zustand, der es dem Schäkel erlaubt, das Geflügelbein aufzunehmen, und einem aktiven Zustand aufweist, in dem die Fixiereinheit mit dem Geflügelbein zwischen dem ersten Arm (76) und dem zweiten Arm (77) in Eingriff steht.

13. Geflügelbeinverarbeitungslinie nach Anspruch 12, wobei der Armantriebsmechanismus durch eine stationäre Führungsbahn und ein Folgerad, das durch die stationäre Führungsbahn geführt wird, gebildet ist.

14. Geflügelbeinverarbeitungslinie nach einem der Ansprüche 12 bis 13, wobei der Knochenhalter ein Basiselement (72), an dem der Schäkel (71) montiert ist aufweist, und ein bewegbares Antriebselement (78), das bewegbar relativ zu dem Basiselement (72) durch den Armantriebsmechanismus antreibbar ist, wobei der erste Arm und der zweite Arm gelenkig mit dem bewegbaren Antriebselement (78) verbunden sind.

15. Verfahren zum automatischen Herstellen eines vorbereitenden Einschnitts in Längsrichtung eines Geflügelbeins, das einen ersten Knochen und einen zweiten Knochen aufweist, die durch ein Gelenk miteinander verbunden und von Fleisch umgeben sind, unter Verwendung eines Systems (1) nach einem der Ansprüche 1 bis 6 und/oder einer Verarbeitungslinie (100) nach einem der Ansprüche 7 bis 14.

## Revendications

1. Système (1) pour réaliser une incision préparatoire dans le sens de la longueur d'une patte de volaille comportant un premier os et un deuxième os articulés par une articulation et entourés de viande, le système comprenant :
une unité de coupe (21) comportant un couteau (51), et
un transporteur (5) pour transporter la patte de volaille le long d'un chemin de transport coïncidant avec l'unité de coupe ;
le système (1) étant **caractérisé en ce qu'**il comprend en outre :
un mécanisme d'entraînement agencé pour être sélectivement dans un premier mode ou un deuxième mode,
le mécanisme d'entraînement dans le premier mode étant configuré pour entraîner l'unité de coupe (21) de façon à déplacer le couteau le long d'une première trajectoire de coupe prédéfinie pour réaliser une première incision préparatoire dans le sens de la longueur de la patte de volaille, et
le mécanisme d'entraînement dans le deuxième mode étant configuré pour entraîner l'unité de coupe (21) de façon à déplacer le couteau le long d'une deuxième trajectoire de coupe prédéfinie, différente de la première trajectoire de coupe, pour réaliser une deuxième incision préparatoire dans le sens de la longueur de la patte de volaille.

2. Système selon la revendication 1, dans lequel le mécanisme d'entraînement dans le premier mode est agencé pour déplacer le couteau (51) entre une position de coupe pour effectuer la première incision préparatoire et une position sans coupe, et dans lequel le mécanisme d'entraînement dans le deuxième mode est agencé pour, par rapport au premier mode, retarder et/ou avancer le mouvement du couteau entre la position de coupe et la position sans coupe.

3. Système selon la revendication 1 ou la revendication 2, dans lequel la première incision préparatoire est une incision préparatoire d'une première longueur, et dans lequel la deuxième incision préparatoire est d'une deuxième longueur différente de la première longueur.

4. Système selon l'une quelconque des revendications précédentes, dans lequel le transporteur (5) est un transporteur aérien, et dans lequel le transporteur est pourvu d'un support d'os réglable en hauteur (7) pour maintenir la patte de volaille par le premier os à une distance réglable du transporteur.

5. Système selon la revendication 4, comprenant un capteur (90) pour détecter un paramètre de la patte de volaille qui peut être corrélé à une dimension de patte de volaille, et une unité de commande configurée pour régler une hauteur de maintien du support d'os (7) par rapport au transporteur (5) en fonction du paramètre de la patte de volaille détecté.

6. Système selon la revendication 5, dans lequel la dimension de la patte de volaille comprend une position de l'articulation entre le premier os et le deuxième os par rapport au transporteur et dans lequel l'unité de commande est configurée pour régler la hauteur de maintien du support d'os de sorte que la patte de volaille est maintenue par le support d'os avec l'articulation à une distance prédéterminée du transporteur.

7. Ligne de traitement de pattes de volaille (100) comprenant un système (1) selon l'une quelconque des revendications précédentes et un système de collecte de viande de patte de volaille (110) agencé sur le chemin de transport en aval dudit système, pour collecter la viande de la patte de volaille.

8. Ligne de traitement de pattes de volaille selon la revendication 7, dans laquelle le système de collecte de viande de patte (110) comprend un dispositif extracteur de viande en amont agencé pour extraire la viande du deuxième os et pas du premier os, et un dispositif extracteur de viande en aval, sur le chemin de transport en aval du dispositif extracteur de viande en amont, agencé pour extraire la viande du premier os.

9. Ligne de traitement de pattes de volaille selon la revendication 8, dans laquelle le dispositif extracteur de viande en amont comporte une première griffe et une deuxième griffe qui sont mobiles l'une par rapport à l'autre entre une position ouverte pour recevoir la patte de volaille et une position fermée pour mettre en prise, au niveau de l'articulation entre le premier os et le deuxième os, la patte de volaille entre la première griffe et la deuxième griffe, dans laquelle le dispositif extracteur de viande en amont est agencé pour, dans la position fermée, déplacer conjointement la première griffe et la deuxième griffe dans le sens de la longueur du deuxième os depuis l'articulation jusqu'à une extrémité opposée de la patte de volaille pour extraire la viande du deuxième os.

10. Ligne de traitement de pattes de volaille selon la revendication 9, dans laquelle le dispositif extracteur de viande en amont comprend un couteau réglable en hauteur agencé pour réaliser une coupe à une distance réglable du transporteur à l'extrémité opposée de la patte de volaille afin de séparer la viande du deuxième os.

11. Ligne de traitement de pattes de volaille selon l'une quelconque des revendications 7 à 10, comprenant un couteau agencé par rapport au chemin de transport entre le dispositif extracteur de viande en amont et le dispositif extracteur de viande en aval, pour couper la patte de volaille au niveau de l'articulation entre le premier os et le deuxième os, afin de séparer le deuxième os du premier os.

12. Ligne de traitement de pattes de volaille selon l'une quelconque des revendications 7 à 11, lorsqu'elle dépend de la revendication 4, dans laquelle le support d'os (7) comprend un étrier (71) pour maintenir la patte de volaille par le premier os, et une unité de fixation pour fixer la patte de volaille par rapport à l'étrier, dans laquelle l'unité de fixation comporte un premier bras (76) et un deuxième bras (77) et un mécanisme d'entraînement de bras pour déplacer le premier bras et le deuxième bras par rapport à l'étrier entre un état passif permettant à l'étrier de recevoir la patte de volaille, et un état actif pour mettre en prise la patte de volaille entre le premier bras (76) et le deuxième bras (77).

13. Ligne de traitement de pattes de volaille selon la revendication 12, dans laquelle le mécanisme d'entraînement de bras est formé par une voie de guidage fixe et une roue suiveuse guidée par la voie de guidage fixe.

14. Ligne de traitement de pattes de volaille selon l'une quelconque des revendications 12 à 13, dans laquelle le support d'os comprend un élément de base (72) sur lequel l'étrier (71) est monté, et un élément d'entraînement mobile (78) pouvant être entraîné de manière mobile par rapport à l'élément de base (72) par le mécanisme d'entraînement de bras, dans laquelle le premier bras et le deuxième bras sont raccordés de manière articulée à l'élément d'entraînement mobile (78).

15. Procédé pour réaliser automatiquement une incision préparatoire dans le sens de la longueur d'une patte de volaille comportant un premier os et un deuxième os articulés par une articulation et entourés de viande à l'aide d'un système (1) selon l'une quelconque des revendications 1 à 6 et/ou d'une ligne de traitement (100) selon l'une quelconque des revendications 7 à 14.
